# EUROPÄISCHE PATENTSCHRIFT

(11) **EP 1 198 898 B1**
(45) Veröffentlichungstag und Bekanntmachung des Hinweises auf die Patenterteilung: **31.10.2007**
(21) Anmeldenummer: 00945900.9
(22) Anmeldetag: 10.07.2000
(51) Int. Cl.: H04B 3/56

(54) **SCHWINGKREISANORDNUNG FÜR RUNDSTEUERTONFREQUENZ FÜR EIN MEHRPHASIGES VERSORGUNGSNETZ**
OSCILLATING CIRCUIT ASSEMBLY FOR A CENTRALISED TELECONTROL AUDIO FREQUENCY FOR A MULTIPHASE SUPPLY GRID
DISPOSITIF DE CIRCUIT OSCILLANT POUR FREQUENCE VOCALE DE TELECOMMANDE CENTRALISEE DANS UN RESEAU DE DISTRIBUTION A PLUSIEURS PHASES

(30) Priorität: 29.07.1999 DE 19935381
(43) Veröffentlichungstag der Anmeldung: 24.04.2002
(73) Patentinhaber: Siemens Schweiz AG, 8047 Zürich (CH)
(72) Erfinder: RICHA, Jean, CH-6340 Baar (CH)
(74) Vertreter: Fischer, Michael
(86) Internationale Anmeldenummer: PCT/EP2000/006512
(87) Internationale Veröffentlichungsnummer: WO 2001/010055

(56) Entgegenhaltungen:
- DE-C- 19 510 659
- WHANG K W: "A COST EFFECTIVE PI NETWORK FILTER FOR ELIMINATION OF STIFF TRANSMISSION CROSSTALK IN ZERO SEQUENCE PROPOGATED DISTRIBUTION POWER LINE CARRIER SIGNALS" IEEE TRANSACTIONS ON POWER DELIVERY,US,IEEE INC. NEW YORK, Bd. PWRD-2, Nr. 1, 1987, Seiten 41-49, XP002033031 ISSN: 0885-8977

## Beschreibung

In elektrischen Energieversorgungsnetzen, insbesondere Hochspannungsnetzen, an denen Kraftwerke mit Generatoren angeschlossen werden, sind oftmals die vorhandenen Kurzschlußströme wegen der sehr niedrigen resultierenden Netzimpedanzen sehr hoch. Deshalb werden zur Begrenzung der 50 Hz Kurzschlußströme Drosseln eingesetzt. Eine derartige Drossel wird auch als Strombegrenzungs-Drosselspule oder Kurzschlussstrom-Begrenzungsdrossel bezeichnet (In der nachfolgenden Beschreibung als Luftdrossel ausgeführt und bezeichnet).

Diese Begrenzungsmaßnahmen wirken sich auch auf die Tonfrequenz von Rundsteueranlagen aus, die dem 50 Hz-Netz überlagert sind. Um eine Absenkung der Tonfrequenzsignale zu verhindern, werden Tonfrequenzsperrkreise, welche auf die entsprechende Tonfrequenz abgestimmt sind, eingesetzt. Dazu kann beispielsweise zwischen einem Generator und einem Versorgungsnetz eine Reihenschaltung mit einer Begrenzungsdrossel und einem Parallelschwingkreis in Ausführung als Sperrkreis für das Tonfrequenzsignal geschaltet sein.

Aus der Praxis ist es bekannt, die induktiven Elemente, nämlich die Begrenzungsdrossel und die Spule des Parallelschwingkreises, in einem gemeinsamen Öl-Transformatorgehäuse unterzubringen. Die induktiven Elemente werden dann als Eisenspulen mit Kern ausgeführt. Durch den relativ großen Ölanteil im Transformatorgehäuse müssen strenge Maßnahmen im Hinblick auf Umweltverschmutzung und Brand vorgesehen werden. Durch den Eisenkern ist es auch äußerst schwierig bei hohen Strömen im Kurzschlußfall die geforderte Linearität der resultierenden Impedanzen einzuhalten. Dazu ist in der Regel ein massiver Eisenkern erforderlich, wodurch jedoch die Verlustleistung im normalen 50 Hz-Betrieb zunimmt. Eine Ausführung der induktiven Elemente in einem gemeinsamen Gehäuse oder als gemeinsames Bauelement ist aus der DE 195 10 659 C1 bekannt.

Des weiteren ist aus dem Artikel "A COST EFFECTIVE PI NETWORK FOR ELIMINATION OF STIFF TRNSMISSION CROSSTALK IN ZERO SEQUENCE PROPOGATED DISTRIBUTION POWER LINE CARRIER SIGNALS", von K. W. Whang, IEEE Transactions on Power Delivery, US, IEEE Inc. New York, Bd. PWRD-2, Nr. 1, 1987, Seiten 41-49, XP002033031, eine Schwingkreisanordnung für Rundsteuertonfrequenz für ein mehrphasiges Versorgungsnetz bekannt, wobei für jede Phase des Versorgungsnetzes ein Schwingkreis mit enem Kondensator und einer Spule vorhanden ist, wobei die Spulen des Schwingkreises der jeweiligen Phasen in räumlicher Nähe zueinander aufgestellt sind, derart, dass eine gegenseitige induktive Beeinflussung gegeben ist.

Der Erfindung liegt die Aufgabe zugrunde, eine Schwingkreisanordnung anzugeben, welche bei Freiluftaufstellung eine platzsparende Anordnung erlaubt.

Die Lösung der Aufgabe gelingt erfindungsgemäß mit den Merkmalen des Anspruchs 1. Demnach ist eine Schwingkreisanordnung für Rundsteuertonfrequenz für ein mehrphasiges Versorgungsnetz vorgesehen, wobei die Schwingkreisanordnung für jede Phase einen Schwingkreis mit einem Kondensator und eine Spule hat. Die Spulen der jeweiligen Phasen sind in räumlicher Nähe zueinander aufgestellt, derart, daß eine gegenseitige induktive Beeinflussung gegeben ist. Die jeweiligen Spulen sind im Hinblick auf eine vorgegebene Impedanz der jeweiligen Filter derart bemessen, daß die gegenseitige Beeinflussung im Hinblick auf die Impedanz kompensiert ist.

Auf diese Weise ist eine platzsparende Anordnung der jeweiligen Schwingkreise möglich, wobei ggf. der erforderliche, sogenannte "Schutz- oder Reihenabstand" gemäß VDE 0101/471 unterschritten werden kann. Bei einer Aufstellung derartiger Schwingkreise in Freiluftanlagen ohne gegenseitige Beeinflussung wären gegebenenfalls Abstände bis zu über 10 m erforderlich. Vorliegend werden nunmehr die jeweiligen Spulen derart bemessen, daß die gegenseitige Beeinflussung kompensiert ist, wobei gleichzeitig ein Angleich der jeweiligen Güten der Spulen erfolgt. Prinzipiell ist es auch denkbar, den gegenseitigen Einfluß durch eine Abstimmung der jeweiligen Kondensatoren zu erzielen. Hierdurch würden jedoch die unterschiedlichen Güten der Spulen nicht berücksichtigt werden, wodurch wiederum keine optimale Abstimmung gewährleistet ist.

Bevorzugt sind die Spulen als Luftspulen in Trockenausführung ausgeführt. Damit ist eine preiswerte Herstellung unter Vermeidung der oben genannten Nachteile beim Stand der Technik möglich.

Die jeweiligen Spulen sind bevorzugt in Reihe, also in Reihenaufstellung, aufgestellt, wobei die Aufstellrichtung quer zur Energieflußrichtung in einem vorgesehenen Schaltanlagenfeld ist. Damit ist eine platzsparende und symmetrische Aufstellung im Schaltfeld möglich.

In einer weiteren vorteilhaften Ausgestaltung sind in Reihe mit den jeweiligen Spulen Drosselspulen für die elektrische Energie geschaltet, wobei die Begrenzungsdrosseln gegebenenfalls ebenfalls in räumlicher Nähe zu den Spulen angeordnet sind. Auf diese Weise sind eine kompakte Anordnung und Kombination von Schwingkreis und Strombegrenzung ermöglicht.

Mit Vorteil können die Spulen endseitig Feinabgriffe aufweisen, welche eine Feineinstellung der jeweiligen Induktivität von bis zu +/- 5 % erlauben. Auf diese Weise ist zusätzlich eine Feinabstimmung der Anordnung bei Aufstellung der Anlage ermöglicht.

Weitere Vorteile und Details der Erfindung werden nachfolgend anhand eines Ausführungsbeispiels näher erläutert. Es zeigen:
- FIG 1: ein elektrisches Schaltbild einer dreiphasigen Schwingkreisanordnung,
- FIG 2 und 3: ein Schaltfeld mit einer Schwingkreisanordnung in einer Drauf- bzw. Seitenansicht und
- FIG 4: Kennlinien einer Schwingkreisanordnung.

In den nachfolgend beschriebenen Figuren sind gleiche Details mit gleichen Bezugszeichen versehen.

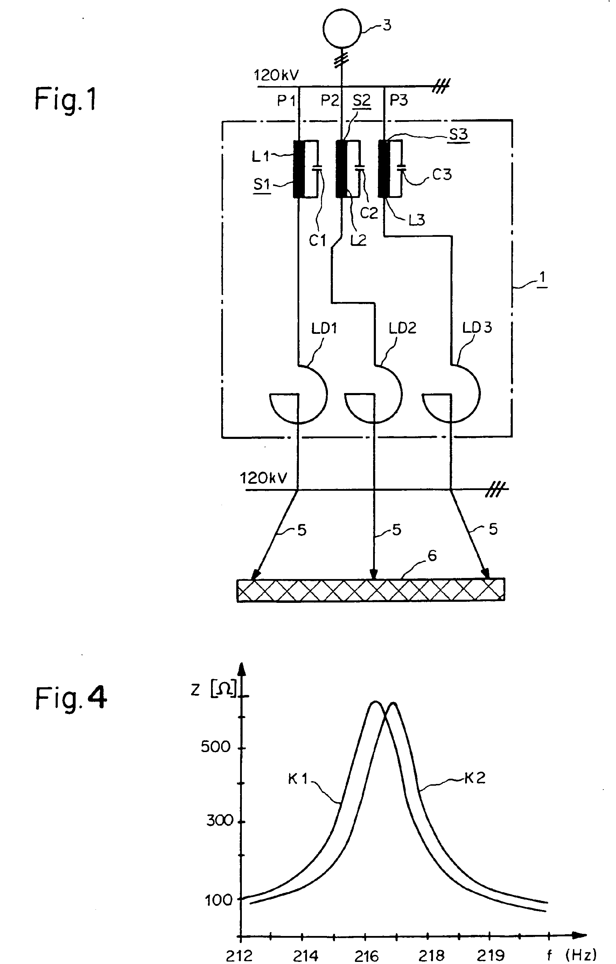

FIG 1 zeigt ein elektrisches Schaltbild einer Schwingkreisanordnung 1, welche an ein elektrisches Energieversorgungsnetz 6 geschaltet ist. Dabei wird von einem Generator 3 elektrische Energie dreiphasig der Schwingkreisanordnung 1 zugeführt und von dieser über Abgänge 5 an ein elektrisches Energieversorgungsnetz 6 weitergeleitet. Beispielhaft kann die gezeigte Anordnung für 120 kV oder allgemein für Hoch- oder Mittelspannung ausgeführt sein.

Die Schwingkreisanordnung 1 weist je Phase P1, P2 und P3 eine Induktivität L1, L2, L3 mit parallelem Kondensator C1, C2, C3 auf, wodurch je Phase ein Schwingkreis S1, S2 bzw. S3, insbesondere ein Sperrkreis, gebildet ist. Die Sperrfrequenz dieser Schwingkreise S1 bis S3 ist für die jeweils gewählte Rundsteuerfrequenz bemessen. Diese kann etwa zwischen 100 und 1000 Hz liegen. Bevorzugte Rundsteuerfrequenzen sind beispielsweise 183,6, 283,6, oder 425 Hz. Eine spezielle oder bevorzugte Rundsteuerfrequenz ist 216 2/3 Hz.

Zur Begrenzung der Kurzschlußströme zwischen dem Generator 3 und den Abgängen 5, was z.B. auch durch technische Maßnahmen am Generator 3 oder am Energieversorgungsnetz 6 erzielt werden kann, ist vorliegend zusätzlich je Phase P1, P2, P3 als Kurzschlussstrom-Begrenzungsdrossel eine Luftdrossel LD1, LD2 und LD3 vorgesehen.

Alle induktiven Bauelemente, insbesondere die Spulen L1, L2, L3 und ggf. die Luftdrossel LD3, sind derart in räumlicher Nähe zueinander angeordnet, daß sie sich gegenseitig beeinflussen. Dies kann beispielsweise derart nahe zueinander sein, daß die gemäß obengenannter Norm geforderten Spannungsabstände gegebenenfalls unterschritten werden. Hierdurch ist ein gegenseitiger induktiver Einfluß zwischen den induktiven Bauelementen gegeben, der eine Veränderung der jeweiligen Schwingkreise zur Folge hat. Ziel ist es vorliegend, diesen Einfluß unter Beibehaltung der räumlichen Nähe zu kompensieren.

Dazu sind zumindest die jeweiligen Spulen L1, L2, L3 derart bemessen, daß die gegenseitige Beeinflussung berücksichtigt ist. Dies betrifft insbesondere die mittlere Spule L2, die von den übrigen Spulen L1 und L3 umschlossen ist. Erst durch eine Berücksichtigung dieser Einflüsse und eine Anpassung der jeweiligen Induktivitäten, insbesondere durch eine Anpassung der jeweiligen Windungszahlen, ist eine optimale Bemessung der jeweiligen Schwingkreise S1, S2, S3 oder Filter möglich. Dies trifft insbesondere zu, wenn die Güte der jeweiligen Spulen L1 bis L3 beibehalten werden soll. Diese verändert sich nämlich ebenfalls bei der gegenseitigen Beeinflussung.

Ein derartig als Sperrfilter ausgebildeter Schwingkreis kann z.B. für 120 kV einen Sperrwiderstand oder eine Sperrimpedanz von etwa 300 Ohm bei 216,6 Hz aufweisen. Dabei betragen die Werte für die Spule L1 und den Kondensator C1 2,86 mH bzw. 188,6 µF. Der Wert für eine Luftdrossel gemäß dem gezeigten Beispiel kann beispielsweise 25 mH betragen.

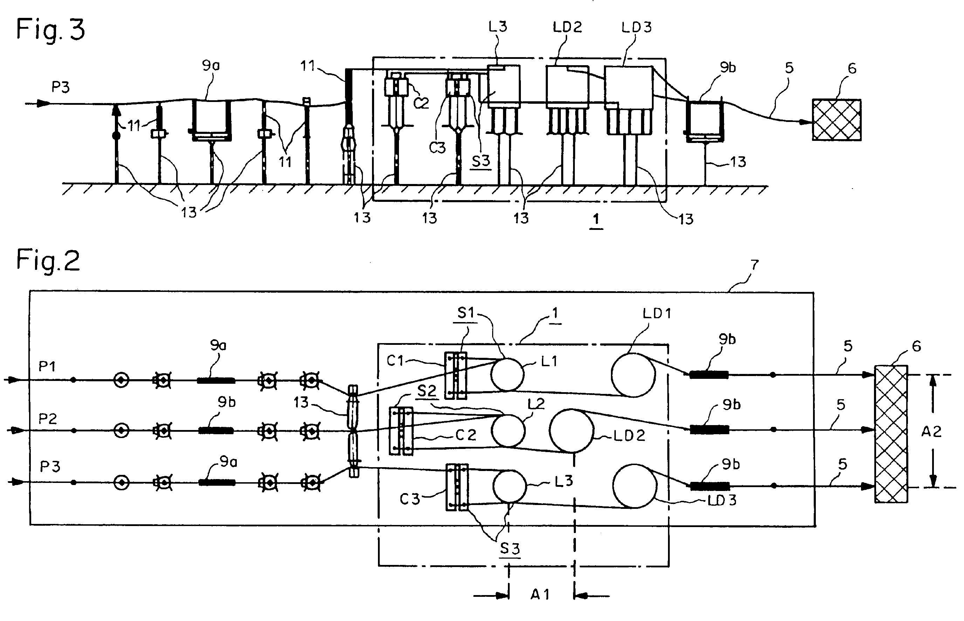

FIG 2 und 3 zeigen eine Aufstellung der Schwingkreisanordnung 1 in einer Drauf- bzw. Seitenansicht. Beispielhaft wird nachfolgend die Anordnung 1 anhand einer Phase P3 näher beschrieben. Die Beschreibung gilt sinngemäß für alle Phasen.

FIG 2 und 3 zeigen eine Ausführung als Freiluftanlage. Dabei ist von dem nicht näher gezeigten Generator 3 die Energie dem Schaltfeld 7, auf dem die Schwingkreisanordnung 1 aufgestellt ist, zugeführt. Über nicht näher bezeichnete Leitungen wird die elektrische Energie über einen ersten Trennschalter 9a der Schwingkreisanordnung 1 zugeführt. Ein zweiter Trennschalter 9b ist auf dem Schaltfeld 7 abgangsseitig vorgesehen. Die Trennschalter 9a und 9b dienen zum Freischalten der Schwingkreisanordnung 1. Dies kann beispielsweise bei Wartungsarbeiten oder für sonstige Situationen im Betrieb erforderlich sein.

Es folgt im weiteren Leitungsverlauf für die Phase P3 die Spule L3, zu der parallel der Kondensator C3 geschaltet ist. Weiterhin schließt sich in Reihe die Luftdrossel LD3 an. Die Spulen L1 bis L3 sind bevorzugt wie gezeigt in Reihe zueinander aufgestellt, wobei diese Reihenaufstellung quer zur Energieflußrichtung im Schaltfeld 7 liegt. Die Luftdrosseln LD1 bis LD3 sind im Dreieck aufgestellt. Durch ihre eigene Größe ist gegebenenfalls ein größerer Abstand als bei den Spulen L1 bis L3 erforderlich. Dies gilt prinzipiell auch für die Kondensatoren C1 bis C3.

Prinzipiell ist es denkbar, daß auch andere Aufstellungen, z.B. eine Dreiecksaufstellung der Spulen L1 bis L3, mit gemischter Anordnung der jeweils übrigen Bauelemente oder gegebenenfalls auch eine schräg oder diagonal versetzte Anordnung der Spulen, möglich sind. Insbesondere ist auch eine unsymmetrische Anordnung der jeweiligen Bauteile denkbar, wodurch eine weiter optimierte Aufstellung in räumlicher Nähe zueinander möglich sein kann.

Wie insbesondere auch aus der Seitenansicht gemäß FIG 3 ersichtlich ist, sind die nicht näher bezeichneten Verbindungsleitungen zwischen den jeweiligen Bauelementen zur zusätzlichen Abstützung gegebenenfalls über Stützisolatoren 11 geführt. Im Hinblick auf die erforderlichen Sicherheitsabstände sind alle Bauelemente und die Stützisolatoren 11 auf Gerüsten 13 aufgestellt, so daß die erforderlichen Abstände zum Boden gewährleistet sind.

Wesentlich für die gezeigte Ausführung ist, daß alle induktiven Teile in Trockenausführung ausgeführt sind und in enger Nähe zueinander auf dem Schaltfeld 7 angeordnet sind. Bei der Bemessung der Spulen L1 bis L3 ist insbesondere die magnetische Kopplung zwischen den Spulen L1 bis L3 in Abhängigkeit von ihrer geometrischen Aufstellung berücksichtigt. Dies betrifft gegebenenfalls auch einen Einfluß der Luftdrosseln LD1 bis LD3. Entsprechend dieser Aufstellung und der resultierenden Berechnungsdaten wird die Anzahl Windungen jeder einzelnen Spule oder Drossel individuell berechnet und bei der praktischen Ausführung angepaßt.

Da diese Berechnung gegebenenfalls nicht alle Einflüsse berücksichtigen kann, kann jede Spule L1 bis L3 endseitig zusätzlich nicht näher gezeigte Feinabgriffe für eine Feinabstimmung aufweisen. Diese können beispielsweise als Abgriff für die jeweiligen Windungen ausgeführt sein, die über entsprechende Klemmen oder Abgreifmittel zugänglich sind. Damit sind auch Induktivitätsänderungen bei Voll- oder Schwachlast kompensierbar. Gegebenenfalls können auf diese Art und Weise auch Veränderungen durch eine Umstellung der Anordnung, z.B. bei Umbauten, nachträglich berücksichtigt werden.

Bei dem gezeigten Ausführungsbeispiel ist insbesondere der Einfluss der Luftdrossel LD2 auf die Schwingkreise S1 bis S3 zu berücksichtigen. Insbesondere der mittlere Schwingkreis S2 erfährt die größte Beeinflussung durch die ihn umgebenden Induktivitäten. Zur Veranschaulichung der Größenverhältnisse sind in FIG 2 die Abstände A1 und A2 eingezeichnet. In der Praxis liegen diese für das vorliegende Ausführungsbeispiel bei etwa 3 m bzw. 5,42 m. Ausgehend von den oben angegebenen Bauteilwerten stellete sich in Versuchen heraus, dass durch die gezeigte Reihenaufstellung der Spulen L1 bis L3 sich für die mittlere Spule L2 eine Änderung von -0,078 mH und für die beiden äusseren Spulen L1 und L3 eine Änderung von +0,016 mH gegenüber ihren Nennwerten ergab. Diese Wechselwirkungen werden nunmehr bei der Bemessung der Spulen berücksichtigt, so dass die Filter- oder Schwingkreisfrequenzen optimiert sind.

FIG 4 zeigt ein Diagramm, bei dem beispielhaft die Impedanz in Abhängigkeit der Frequenz für einen Parallelschwingkreis gezeigt und aus dem der gegenseitige Einfluß der Spulen erkennbar ist. In einem Versuch wurde dabei der Abstand der Spulen der jeweiligen Phasen zueinander verändert. Dabei wurden die beiden Impedanzkurven K1 und K2 ermittelt. Die Kurve K1 hat ihren Scheitel bei etwa 216 Hz. Durch den induktiven Einfluß der Spulen zueinander erfolgt eine Veränderung von etwa 0,6 Hz entsprechend auf 216,06 Hz. Bezogen auf 216,06 Hz ist dies eine Veränderung der Impedanz um etwa 170 Ohm, was unter Umständen im Bereich des halben Sperrwiderstandes einer derartigen Anordnung liegt. Bei einer Nichtberücksichtigung der gegenseitigen Einflüsse bleibt gegebenenfalls auch die Güte der Spulen unberücksichtigt, wodurch wiederum erhöhte Verluste zu tragen sind.

Der Grundgedanke der neuen Idee kann auch folgendermaßen beschrieben werden: Für die Dimensionierung der Schwingkreise berechnet man die Kopplung zwischen den einzelnen Spulen oder Induktivitäten in Abhängigkeit von ihrer geometrischen Aufstellung. Entsprechend der Berechnungsdaten wird dann die Windungszahl jeder Spule individuell berechnet. Für eine Feinabstimmung in der Anlage bei Aufstellung werden noch zusätzliche Windungen und Feinabgriffe vorgesehen. Auf diese Weise ist eine Kompensation von Induktivitätsänderungen - sowohl für Vollast als auch für Schwachlast - für die gesamte Schwingkreisanordnung möglich.

## Patentansprüche

1. Schwingkreisanordnung (1) für Rundsteuertonfrequenz für ein mehrphasiges Versorgungsnetz,
- wobei für jede Phase (P1 bis P3) des Versorgungsnetzes ein Schwingkreis mit einem Kondensator (C1 bis C3) und einer Spule (L1 bis L3) angeordnet ist,
- wobei die Spulen (L1 bis L3) der jeweiligen Phasen (P1 bis P3) in räumlicher Nähe zueinander aufgestellt sind, derart, daß eine gegenseitige induktive Beeinflussung gegeben ist,
**dadurch gekennzeichnet,**
- **dass** die Spulen (L1 bis L3) der jeweiligen Phasen (P1 bis P3) im Hinblick auf eine vorgegebene Impedanz der jeweiligen Schwingkreise derart bemessen sind, daß die gegenseitige induktive Beeinflussung in Abhängigkeit von der geometrischen Aufstellung der Spulen. (L1 bis L3) zueinander mittels Anpassung der Windungsanzahl der Spulen (L1 bis L3) kompensiert ist.

2. Schwingkreisanordnung nach Anspruch 1, wobei die Spulen (L1 bis L3) als Luftspulen ausgeführt sind.

3. Schwingkreisanordnung nach Anspruch 1 oder 2, wobei die Spulen (L1 bis L3) in einer Reihe aufgestellt sind.

4. Schwingkreisanordnung nach Anspruch 3, wobei die Reihenaufstellung der Spulen (L1 bis L3) in einem Schaltfeld (7) angeordnet ist und die Aufstellungsrichtung der Reihenaufstellung quer zur elektrischen Energieflußrichtung im Schaltfeld liegt.

5. Schwingkreisanordnung nach einem der Ansprüche 1 bis 4, wobei die jeweiligen Schwingkreise (S1 bis S3) der jeweiligen Phasen (P1 bis P3) als Reihen- oder Parallelschwingkreise ausgebildet sind.

6. Schwingkreisanordnung nach einem Anspruch 5, wobei bei Ausbildung als Parallelschwingkreise den Schwingkreisen (S1 bis S3) jeweils eine jeweilige Luftdrossel (LD1 bis LD3) zur Strombegrenzung in Reihe geschaltet ist.

7. Schwingkreisanordnung nach Anspruch 6, wobei die induktive Beeinflussung der Luftdrosseln (LD1 bis LD3) auf eine vorgegebene Impedanz der jeweiligen Schwingkreise bei der Bemessung der jeweiligen Spulen (L1 bis L3) berücksichtigt ist.

8. Schwingkreisanordnung nach einem der Ansprüche 1 bis 7, wobei die jeweiligen Spulen (L1 bis L3) endseitig jeweils Feinabgriffe aufweisen, welche eine Veränderung der Induktivität der jeweiligen Spulen (L1 bis L3) bis zu +/- 5 % ihres Nennwertes erlauben.

## Claims

1. Resonant circuit arrangement (1) for ripple control audio frequency for a multi-phase supply network,
- wherein for each phase (P1 to P3) of the supply network there is arranged a resonant circuit comprising a capacitor (C1 to C3) and a coil (L1 to L3),
- wherein the coils (L1 to L3) of the respective phases (P1 to P3) are configured in spatial proximity to one another such that mutual inductive interference occurs,
**characterised in that**
- the coils (L1 to L3) of the respective phases (P1 to P3) are rated in relation to a predefined impedance of the respective resonant circuits such that the mutual inductive interference is compensated for as a function of the geometrical configuration of the coils (L1 to L3) with respect to one another by adjustment of the number of turns of the coils (L1 to L3).

2. Resonant circuit arrangement according to claim 1, wherein the coils (L1 to L3) are embodied as air-cored coils.

3. Resonant circuit arrangement according to claim 1 or 2, wherein the coils (L1 to L3) are configured in series.

4. Resonant circuit arrangement according to claim 3, wherein the series configuration of the coils (L1 to L3) is arranged in a switchgear panel (7) and the configuration direction of the series configuration is at right angles to the direction of flow of electrical energy in the switchgear panel.

5. Resonant circuit arrangement according to claims 1 to 4, wherein the respective resonant circuits (S1 to S3) of the respective phases (P1 to P3) are embodied as series or parallel resonant circuits.

6. Resonant circuit arrangement according to claim 5, wherein when embodied as parallel resonant circuits there is connected in series to the resonant circuits (S1 to S3) in each case a respective air-cored reactor (LD1 to LD3) for the purpose of limiting current.

7. Resonant circuit arrangement according to claim 6, wherein the inductive interference of the air-cored reactors (LD1 to LD3) on a predefined impedance of the respective resonant circuits is taken into account in the rating of the respective coils (L1 to L3).

8. Resonant circuit arrangement according to one of claims 1 to 7, wherein the respective coils (L1 to L3) in each case have on their end side fine taps which permit the inductance of the respective coils (L1 to L3) to be changed by up to +/- 5 % of their rated value.

## Revendications

1. Dispositif de circuits oscillants (1) pour fréquence vocale de télécommande centralisée d'un réseau d'alimentation polyphasé, dans lequel
- un circuit oscillant comportant un condensateur (C1 à C3) et une bobine (L1 à L3) est placé dans chaque phase (P1 à P3) du réseau d'alimentation,
- les bobines (L1 à L3) des phases respectives (P1 à P3) sont placées à proximité l'une de l'autre de façon à avoir une influence inductive mutuelle,
**caractérisé en ce que**
- les bobines (L1 à L3) des phases respectives (P1 à P3) sont dimensionnées, en tenant compte d'une impédance prescrite du circuit oscillant respectif, de telle sorte que l'influence inductive mutuelle est compensée, en fonction de l'agencement géométrique mutuelle des bobines (L1 à L3), en adaptant le nombre de spires des bobines (L1 à L3).

2. Dispositif de circuits oscillants selon la revendication 1, dans lequel les bobines (1 à 3) sont réalisées sous la forme de bobines à air.

3. Dispositif de circuits oscillants selon la revendication 1, dans lequel les bobines (L1 à L3) sont montées en série.

4. Dispositif de circuits oscillants selon la revendication 3, dans lequel le montage en série des bobines (1 à 3) est placé dans un tableau de distribution (7) et le sens de montage en série est transversal au sens du flux d'énergie électrique dans le tableau de distribution.

5. Dispositif de circuits oscillants selon l'une des revendications 1 à 4, dans lequel les circuits oscillants respectifs (S1 à S3) des phases respectives (P1 à P3) sont conformés en circuits oscillants série ou parallèles.

6. Dispositif de circuits oscillants selon la revendication 5, dans lequel, lorsque les circuits oscillants (S1 à S3) sont conformés en circuits oscillants parallèles, une bobine à air respective (LD1 à LD3) est montée en série afin de limiter le courant.

7. Dispositif de circuits oscillants selon la revendication 6, dans lequel l'influence inductive des bobines à air (LD1 à LD3) sur une impédance prescrite des circuits oscillants respectifs est prise en compte dans le dimensionnement des bobines respectives (L1 à L3).

8. Dispositif de circuits oscillants selon l'une des revendications 1 à 7, dans lequel les bobines respectives comportent chacune à une extrémité une prise intermédiaire fine qui permet de modifier l'inductance des bobines respectives (L1 à L3) jusqu'à ± 5% de leur valeur nominale.
